# EUROPÄISCHE PATENTANMELDUNG

(11) **EP 1 887 453 A2**
(43) Veröffentlichungstag der Anmeldung: **13.02.2008**
(21) Anmeldenummer: 07015679.9
(22) Anmeldetag: 09.08.2007
(51) Int. Cl.: G06F 3/039

(54) **Heizbare Handauflagezone bei Dateneingabegeräten**

(30) Priorität: 09.08.2006 DE 102006037151
(71) Anmelder: Langer, Bernd, Dr.-Ing., 74388 Talheim (DE)
(72) Erfinder: Langer, Bernd, Dr.-Ing., 74388 Talheim (DE)
(74) Vertreter: Müller, Hans

(57) **Zusammenfassung**

Die Erfindung bezieht sich auf eine Auflage bei Dateneingabegeräte und bei sogenannten Mousepads, die zur ergonomischen Handhabung und Schonung des Handgelenks beheizbar sind.

## Beschreibung

Mousepads dienen als Unterlage zur besseren Führung von Positions-Eingabegeräten, die als sogenannte Computer-Mice für PCs vielfach verbreitet sind. Letztere werden wie ein Spielzeug-Auto mit der Hand über eine Fläche geführt und dienen als rollende oder gleitende Positionsgeber eines Mauszeigers auf dem Bildschirm. Durch betätigbare Tasten können sie weitere Steuerungsfunktionen übernehmen. Mousepads werden verwendet, um eine bessere Traktion und damit exaktere Führung des rollbaren Eingabegeräts bewirken und einen definierten Bereich auf dem Arbeitstisch für diesen Zweck freihalten zu können.

Die Bewegung der Hand des Bedieners in diesem kleinen Areal während der am Computer verbrachten Zeit - vielfach während Arbeit und Freizeit - bedingt durch die Auflage einer kleinen, stets belasteten Fläche (vorwiegend unter dem äußeren Handwurzelknochen) einen starken Einfluss dieser Kontaktfläche auf das Wohlbefinden des Benutzers. So wird von empfindlichen Personen sowohl eine Form der Acrohypothemie, bzw. Versteifungen der Hand beklagt und - insbesondere bei Anwendung in zugigen Fabrikhallen und Außenbereichen - eine unterkühlte Bedienhand und daraus resultierendes Unwohlsein. In ähnlicher Weise werden die Handgelenke von Computer-Nutzern auch an den Rändern von Tastaturen, so insbesondere bei Laptops und ähnlichen Geräten, im Auflagefeld unterhalb der Tastatur und um das Touchpad herum belastet.

Zur Verbesserung der Ergonomie wurden vielfache Ausführungen wie Kunststoffschäume mit integralen oder auflaminierten Skin-Oberflächen geschaffen. Sie haben unterschiedliche Resonanz gefunden, insbesondere zeigt sich bei Mousepads das Problem, dass die Fläche entweder als zu weich empfunden wird und einzelne Mousetypen nicht gut drauf laufen, oder dass die Druckverteilung für die kritische Stelle des Handwurzelknochens zu gering ist.

Weiter sind Ausführungen bekannt, bei denen durch Beheizung des Mousepads das Kälte- und Erstarrungsgefühl und entsprechende physiologische Folgen verhindert werden (US 5.674.423). Dies bezieht sich auf frühere Schutzrechte zur Therapie von Verletzungen und Verspannungen von Muskeln und Vermeidung von Gelekentzündungen durch wärmende Auflagen, wie beispielsweise in US 4.891.501, 5.151.578, 4.661.689, 3.178.559, 5.160.828, 4.245.149 und 4.628.188, sowie JP 64-54131 beschrieben.

Das beheizbare Mousepad von D.E.Wright sen., US 5.674.423 hat sich aber offensichtlich nicht durchsetzen können, denn es gibt es eine Vielzahl unterschiedlicher Mousepads und dem entsprechend sehr unterschiedliche Präferenzen der Nutzer, so dass eine einzige- oder kleine Zahl von Ausführungen keinen Kundenzuspruch fand. Ein Durchbruch war dieser Lösung jedoch auch deshalb verwehrt, weil eine zusätzliche Netzstromführung und ein notwendigerweise relativ dicker Aufbau durch die Führung und Isolation der Heizdrähte und ihrer thermischen Abschirmung nach unten ein weitgehend starres Tablett bedingt, das seinen Nutzer dadurch als offensichtlich anfällige, beziehungsweise zu Beeinträchtigungen neigende Person zeigt - was sich im Berufsleben nicht empfiehlt.

Es ist daher Aufgabe vorliegender Erfindung, ein Lösung zu schaffen, die, ohne technisch besonders aufwändig zu sein und einen extra Stromanschluss zu verlangen, die Handauflagefläche so temperiert, dass Verspannungen, Druck- und Kälteempfindung, die von der Handwurzel ausgehen, vermieden werden.

Dies wird erfindungsgemäß durch eine Auflage gelöst, die mit Heizelementen ausgestattet ist, die über einen USB-Leitung oder vergleichbaren ähnlichen stromführenden Anschlüssen direkt aus dem Rechner gespeist werden.

Heizauflagen können in unterschiedlicher Form ausgebildet sein. Die Heizung selber kann mittels Heizdrähten (Widerstandsdrähten) vorzugsweise in mäandernder Verlegung, mittels Peltier-Elementen, mittels Halbleiter-Folien-Raster, sowie mittels Raster von Mikrowellen-Elementen oder Infrarot-Leuchtdioden bewirkt werden.

In einfachen Ausführungen für ebene Oberflächen sind mit Widerstands-Metallschichten versehene und zu mäandernden Leiterbahnen geätzte oder gedruckte Platinen einsetzbar.

Dabei können die Auflagen für individuelle Anpassung und Formgebung in Strukturen aus parallel geschalteten Elementen aufgeteilt werden, die wie Blütenblätter um eine Zuleitung angeordnet sind, so dass sich durch Ausschneiden einzelner Elemente ("Blütenblätter") an die Unterlage anpassbare Formen ergeben. In besonderen Ausführungen können dabei getrennt geschaltete Heizflächen auch unterschiedliche Temperaturen aufweisen.

In einer Ausführung für dreidimensional geformten Auflageflächen werden vorzugsweise Elemente eingesetzt, die aus in flexible Matrices (zum Beispiel Kunststoff-Gewirke) eingearbeitete Kohlefäden bestehen.

In vorteilhaften Ausführungen der Erfindung werden die Heizelemente in Gelpads eingebettet, die statt einer nahezu punktförmigen Auflage des Handwurzelknochens den Aufdruck der Hand über den unteren Teil des Handballens gleichmäßig verteilen können.

Denkbar ist dabei der Einsatz von Infrarot-Leuchtdioden, die mit Hilfe breit verteilender Reflektoren oder Linsen eine weitgehend uniforme Verteilung der Wärmestahlung auf der zur Handauflage vorgesehenen Fläche bewirken, denn für sie ist eine gewisse Dicke der Auflage erforderlich. Ähnliches gilt für den Einsatz von Miniatur-Mikrowellenstrahlern, deren Wirkung über derartige Gelpads erfolgen kann und für Peltier-Elemente, die sich ebenfalls zur Einbettung in Gelschichten eignen, die als Direkt-Auflage jedoch oftmals zu dick und für gewölbte Flächen zu starr wären.

Die Temperatur kann dabei entweder über Hard- beziehungsweise Software regelbar oder konstant und nicht veränderbar sein. Auch ein komplettes Abschalten kann über Hard- beziehungsweise Software oder über einen Steckverbinder geleistet werden.

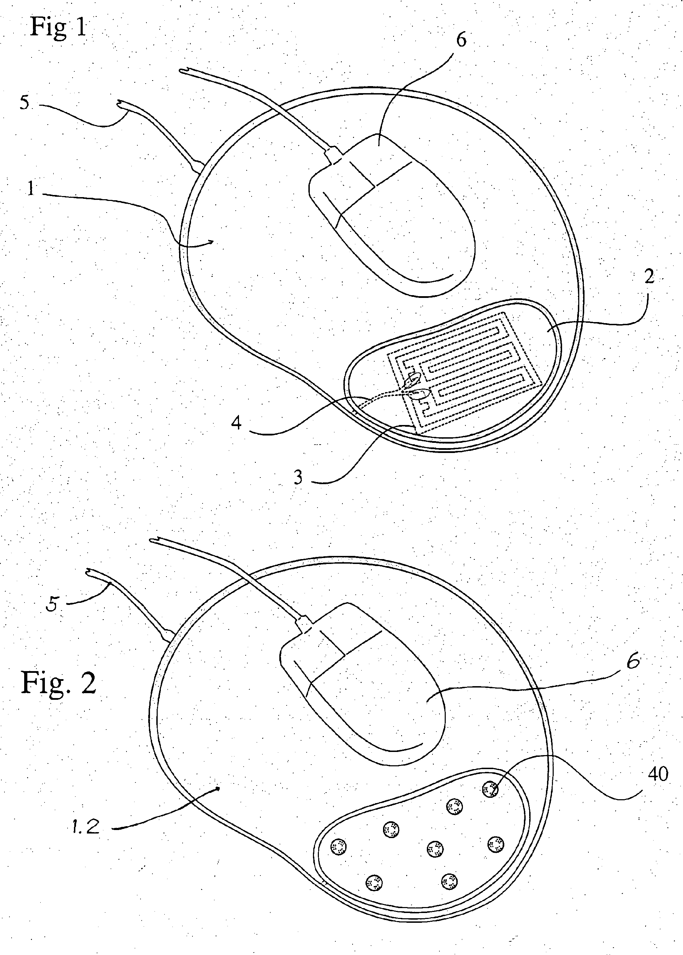

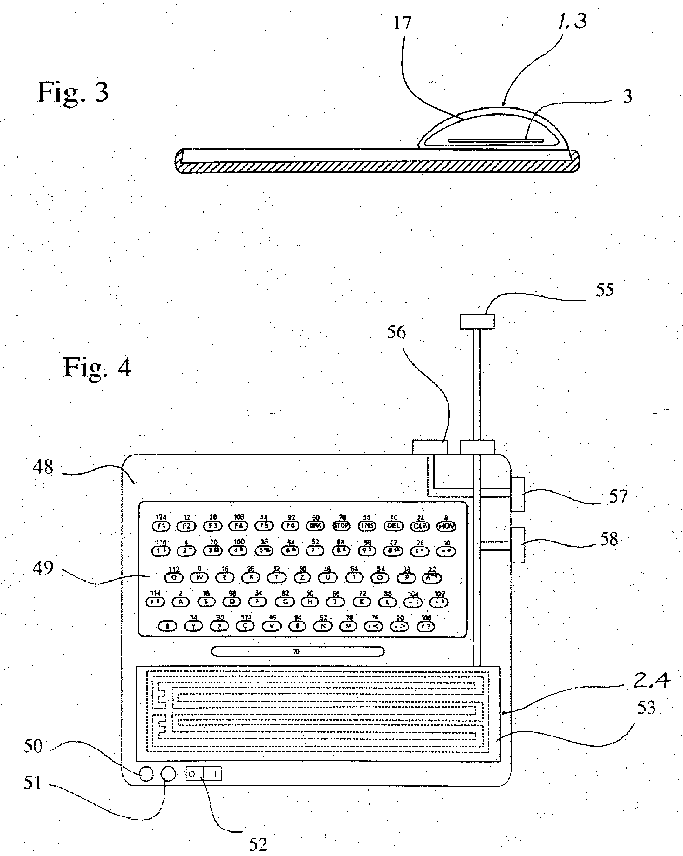

Die Erfindung wird in den nachfolgenden Zeichnungen Fig. 1 bis Fig. 4 näher erläutert:
Fig. 1 zeigt ein Mousepad 1 mit einer Zuleitung 5 zum USB-Anschluss des Rechners, der Mouse 6 , dem Heizelement 3 mit seiner Zuleitung 4 zum Anschluss 5 am USB-Port und der Hand-Auflagezone 2, die, wie in Fig. 3 gezeigt, auch als Gelpad ausgeführt sein kann.
Fig 2 zeigt ein vergleichbares Mousepad 1.2, bei dem die Heizung aus einer Matrix von Infrarot-LEDs 40 besteht.
Fig 3 zeigt ein Mousepad 1.3 im Querschnitt, bei dem ein Heizelement 3 (das sowohl als Widerstandsheizung, Peltier, IR oder Mikrowellen-Array ausgeführt sein kann) in einem Gelpad 17 integriert ist.
Fig. 4 zeigt die Anordnung einer in den Hand-Auflage-Bereich 2.4 eines Computergehäuses 48 mit Tastatur 49 integrierten Heizfolie 53, wie z.B. bei Laptops. Die Energieversorgung für die Heizung wird über einen externen USB-Anschluss 55 oder vergleichbare andere stromführende Anschlüsse (USB-Anschlüsse 56 bis 58) hergestellt, die jeweils zur Heizfolie 53 durchgeschleift sind. Mit den Tastern 50 und 51 ist die Heizung an- und abschaltbar, mit dem Regler 52 ist die Temperatur einstellbar.

## Patentansprüche

1. Heizbare Handauflagezone bei Dateneingabegeräten, **dadurch gekennzeichnet, dass** die Energie zur Beheizung aus dem USB-Anschluss (55 bis 58) oder vergleichbaren stromführenden Anschlüssen des Computers / Laptops / Peripheriegeräten etc. bezogen wird.

2. Handauflagezone nach Anspruch 1, **dadurch gekennzeichnet, dass** die Auflage sowohl auf Mousepads (1), wie auch auf die Handauflage vor Tastaturen (49) und andere Eingabegeräte anbringbar ist.

3. Handauflagezone nach Anspruch 1 und 2, **dadurch gekennzeichnet, dass** die Auflage in verschiedenen geometrischen Formen ausführbar und aus parallel geschalteten Segmenten zuschneidbar ist.

4. Handauflagezone nach Anspruch 1 bis 3, **dadurch gekennzeichnet, dass** die Auflage adhäsiv zu befestigen ist.

5. Handauflagezone nach Anspruch 1 bis 3, **dadurch gekennzeichnet, dass** die Auflage ablösbar verklebt werden kann.

6. Handauflagezone nach Anspruch 1, **dadurch gekennzeichnet, dass** die Heizung durch die Widerstandswirkung eingearbeiteter Carbon-Fäden oder Ähnliches erfolgt.

7. Handauflagezone nach Anspruch 1, **dadurch gekennzeichnet, dass** die Heizung durch isolierte Widerstandsdrähte, wie Constantan, erfolgt.

8. Handauflagezone nach Anspruch 6 oder 7, **dadurch gekennzeichnet, dass** die Heizung durch die Widerstandsbahnen erfolgt, die auf flexible Platinen aufgebracht sind.

9. Handauflagezone nach Anspruch 1, **dadurch gekennzeichnet, dass** die Heizung in Gelpad-Auflagen (17) integriert ist.

10. Handauflagezone nach Anspruch 8, **dadurch gekennzeichnet, dass** die Heizung durch eingearbeitete Peltier-Elemente erfolgt.

11. Handauflagezone nach Anspruch 8, **dadurch gekennzeichnet, dass** die Heizung durch Infrarot-Leuchtdioden (40) erfolgt.

12. Handauflagezone nach Anspruch 11, **dadurch gekennzeichnet, dass** die IR-LEDs mit entsprechend flachen Reflektoren versehen sind, um die Wärmestrahlung gleichmäßig zu verteilen.

13. Handauflagezone nach Anspruch 8, **dadurch gekennzeichnet, dass** die Heizung durch Miniatur-Mikrowellenstrahler erfolgt.

14. Handauflagezone nach Anspruch 1, bei der die Temperatur über Hardbeziehungsweise Software regelbar beziehungsweise die Heizfunktion ein- und ausschaltbar ist.

15. Handauflagezone nach Anspruch 1, bei der weitere elektrische Anschlüsse parallel geschaltet sind (zum Beispiel: USB Hubs)

16. Handauflagezone nach Anspruch 1, **dadurch gekennzeichnet, dass** getrennte Heizelemente verschiedene Temperaturen aufweisen.

17. Handauflagezone nach Anspruch 1, **dadurch gekennzeichnet, dass** das Kabel an dem zu heizenden Objekt durch einen Stecker getrennt werden kann.
